# EUROPÄISCHE PATENTSCHRIFT

(11) **EP 3 738 752 B1**
(45) Veröffentlichungstag und Bekanntmachung des Hinweises auf die Patenterteilung: **06.10.2021**
(21) Anmeldenummer: 19174651.0
(22) Anmeldetag: 15.05.2019
(51) Int. Cl.: B29C 70/02, B29C 70/08, B29C 51/14, B29C 65/00, B29C 70/78, B32B 27/12, B32B 37/04, B60K 15/03, B65D 1/02, B65D 6/34, B65D 88/12

(54) **VERFAHREN ZUR HERSTELLUNG EINES KUNSTSTOFFTANKS MIT VERSTÄRKUNGEN**
METHOD FOR PRODUCING A PLASTIC TANK WITH REINFORCEMENTS
PROCÉDÉ DE FABRICATION D'UN RÉSERVOIR EN MATIÈRE PLASTIQUE RENFORCÉE

(43) Veröffentlichungstag der Anmeldung: 18.11.2020
(73) Patentinhaber: Magna Energy Storage Systems GesmbH, 8261 Sinabelkirchen (AT)
(72) Erfinder: PUCHLEITNER, Rainer, 8052 Graz (AT); GUTMANN, Peter, 8261 Sinabelkirchen (AT)
(74) Vertreter: Zangger, Bernd

(56) Entgegenhaltungen:
- EP-A1- 2 607 134
- EP-A1- 2 664 445
- DE-A1-102013 004 931

## Beschreibung

### Gebiet der Erfindung

Die vorliegende Erfindung betrifft ein Verfahren zur Herstellung eines Kunststofftanks mit Verstärkungen.

### Stand der Technik

Im Automobilbau werden seit einiger Zeit Tanks, insbesondere Kraftstofftanks, nicht nur aus Metall, sondern zunehmend auch aus Kunststoff gefertigt. Derartige Kunststofftanks sind leicht und kostengünstiger herstellbar, jedoch ist die mechanische Festigkeit von Kunststofftanks nicht für alle Anwendungen ausreichend.

Insbesondere beim Betrieb von abgasarmen Fahrzeuge wie Partial Zero Emissions Vehicles (PZEV) sind Betriebsstrategien von Tanksystemen erforderlich, die konstante Drücke bis 400 mBar und Druckspitzen von Minus 210 mBar und plus 560 mBar vorsehen, die in gewissen Zonen des Tanksystems zu hohen Verformungen führen können. Verkettungen von Druck und Temperaturspitzen in gewissen Betriebszuständen des Systems können, vor allem bei Tanks mit Schalenmaterial aus Kunststoffen, hohe Relativbewegungen der Tankschale durch elastische und plastische Verformungen bedingen und müssen durch konstruktive Maßnahmen beschränkt werden.

Kunststofftanks, insbesondere Drucktanks, müssen daher teilweise mit Verstärkungsmaßnahmen realisiert werden.

Bekannte Stützkonzepte verwenden zumeist karosseriefeste Anlagepunkte um Verformungen der Tankblase zu begrenzen. Für unter Druck befindliche Tanksysteme reichen diese Maßnahmen jedoch nicht aus und es müssen zusätzliche Maßnahmen verwendet werden, um Verformungen zu vermindern. Oftmals wird die Schalendicke der Tankblase erhöht oder es werden versteifende angeschweißte Innenbauteile verwendet um die Verformung zu begrenzen. Solche Maßnahmen ziehen signifikante Einbußen für das Tankvolumen nach sich und beschränken somit die Funktion des Systems.

Aus der EP 2 664 445 A1 ist eine Mehrschichtverbundstruktur bekannt, die eine Sichtstruktur eines Fahrzeugs bildet oder als Sichtstruktur für ein Fahrzeug vorgesehen ist, beispielsweise eine Motorhaube, Seitenwand oder ein Armaturenbrett, und die durch Umformung um nichtparallele Achsen dreidimensional geformt ist, die Mehrschichtverbundstruktur umfassend: eine äußere, erste Thermoplastschicht, eine zweite Thermoplastschicht und eine dritte Thermoplastschicht sowie optional eine oder mehrere weitere Thermoplastschichten, eine erste Faserschicht, die in der ersten oder zweiten Thermoplastschicht oder zwischen der ersten und der zweiten Thermoplastschicht eingebettet ist, und eine zweite Faserschicht, die in der zweiten oder dritten Thermoplastschicht oder zwischen der zweiten und der dritten Thermoplastschicht eingebettet ist, sowie optional eine oder mehrere weitere Faserschichten, wobei die Mehrschichtverbundstruktur in Faser-Sichtoptik ausgeführt ist, wenigstens die erste Thermoplastschicht, vorzugsweise auch wenigstens noch die zweite Thermoplastschicht, aus amorphem Kunststoff gebildet ist, die erste Faserschicht ein Flächengebilde aus Endlosfasern oder ein Vlies und die zweite Faserschicht ein Flächengebilde aus Endlosfasern oder ein Vlies ist.

Die EP 2 607 134 A1 offenbart einen Hohlkörper, umfassend eine thermoplastische Wand und eine faserige Verstärkung, die auf mindestens einem Teil der Oberfläche der Wand, vorzugsweise ihrer Außenfläche, aufgeschweißt ist, wobei die faserige Verstärkung einen Thermoplasten umfasst, der dem der Wand des Hohlkörpers ähnlich oder mit diesem kompatibel ist, eine Dicke von mindestens 1 mm aufweist und 30 bis 60 Gew.-% Fasern umfasst.

Aus der DE 10 2013 004 931 A1 ist ein Verfahren zur Herstellung eines Kraftstoffbehälters auf der Basis von thermoplastischem Kunststoff bekannt, folgende Verfahrensschritte umfassend: Herstellen von plattenförmigen Halbzeugen aus einem Faserverbundwerkstoff mit einer Matrix aus thermoplastischem Kunststoff, Kaschieren der Halbzeuge mit einem Laminat, welches wenigstens eine Barriereschicht für Kohlenwasserstoffe umfasst, Wärmebehandlung der kaschierten Halbzeuge bis zur Plastifizierung des thermoplastischen Kunststoffs, Tiefziehen der plastifizierten Halbzeuge in einem Tiefziehwerkzeug zu Schalen und Fügen der Schalen zu einem im Wesentlichen geschlossenen Behälter.

### Zusammenfassung der Erfindung

Es ist eine Aufgabe der Erfindung, ein Verfahren zur Herstellung eines Kunststofftanks mit Verstärkungen anzugeben, dass eine effiziente Verstärkung des Tanks erreicht und dabei einfach und kostengünstig durchgeführt werden kann.

Die Lösung der Aufgabe erfolgt durch ein Verfahren zur Herstellung eines Kunststofftanks mit Verstärkungen mit den Merkmalen gemäß Anspruch 1.

Das erfindungsgemäße Verfahren umfasst die Schritte: Bereitstellen einer Halbzeugplatte aus Kunststoff zur Bildung mindestens eines Teiles der Tankwand des Kunststofftanks, wobei die Halbzeugplatte zumindest eine Außenschicht aus einem ersten thermoplastischen Kunststoff aufweist, Bereitstellen mindestens eines faserverstärkten Strukturbauteils als Verstärkung für die Tankwand des Kunststofftanks, wobei das faserverstärkte Strukturbauteil eine Matrix aus einem zweiten thermoplastischen Kunststoff umfasst, wobei der zweite thermoplastische Kunststoff mit dem ersten thermoplastischen Kunststoff verschweißbar ist, Aufbringen des faserverstärkten Strukturbauteils auf einen vordefinierten Bereich der Außenschicht der Halbzeugplatte, Durchlaufen der Halbzeugplatte mit aufgebrachtem faserverstärkten Strukturbauteil eines Durchlaufofens wobei der faserverstärkte Strukturbauteil mit der Außenschicht der Halbzeugplatte verschmilzt, Umformen der erwärmten Halbzeugplatte mit damit verschmolzenem faserverstärkten Strukturbauteil in die Endform mindestens des Teiles der Tankwand, Verbinden mit mindestens einem weiteren Teil der Tankwand zur Bildung der vollständigen Tankwand des Kunststofftanks.

Erfindungsgemäß wird ein Kunststofftank, zumindest zum Teil, aus einer Halbzeugplatte aus Kunststoff gefertigt, die durch einen Durchlaufofen geführt wird um für einen Umformprozess erwärmt zu werden. Zur Verstärkung, und somit zur Reduktion von Verformungen des hergestellten Kunststofftanks, wird zumindest ein, bevorzugt mehrere, faserverstärktes Strukturbauteil vor dem Durchlaufen des Durchlaufofens auf die Halbzeugplatte aufgebracht, in einem Bereich, der verstärkt werden soll. Die Fläche des faserverstärkten Strukturbauteils ist dazu kleiner als die Fläche der Halbzeugplatte, so dass das faserverstärkte Strukturbauteil einen "Flecken" bildet und auch als "Patch" bezeichnet wird, oder als "Fasermatte". Das faserverstärkte Strukturbauteil verwendet ein Matrixmaterial, das mit dem Material dass die Halbzeugplatte zumindest an der Seite aufweist, auf welche das faserverstärkte Strukturbauteil aufgebracht wird, verschweißbar ist. Dies ermöglicht eine stoffliche Verbindung der Matrix der Fasermatte mit dem Schalenmaterial. Der erste thermoplastische Kunststoff und der zweite thermoplastische Kunststoff können chemisch ähnlich sein. Bevorzugt ist der erste thermoplastische Kunststoff das gleiche Material wie der zweite thermoplastische Kunststoff. Beim ohnehin nötigen Durchlaufen des Durchlaufofens bzw. Tunnelofens wird daher das faserverstärkte Strukturbauteil mit der Halbzeugplatte verschmolzen bzw. verschweißt. Durch die gezielte Aufbringung des oder der faserverstärkten Strukturbauteile wird eine gute Versteifung des Kunststofftanks erreicht. Das Verfahren nutzt die Wärme des Durchlaufofens und kann kostengünstig durchgeführt werden.

Beim Umformen entsteht entweder gleich der vollständige Tank oder ein Teil des Tanks, beispielsweise eine Halbschale des Kunststofftanks, so dass der gesamte Tank durch Verbindung eines oder mehrerer weiterer Teile, beispielsweise einer weiteren auf diese Weise erzeugten Halbschale mit Versteifungen, vervollständigt werden kann.

Der erste thermoplastische Kunststoff der Außenschicht der Halbzeugplatte und/oder der zweite thermoplastische Kunststoff der Matrix des faserverstärkten Strukturbauteils ist bevorzugt High Density Polyethylen (HDPE) oder Polyamid (PA) oder Linear Low Density Polyethylen (LLDPE).

Vorzugsweise werden mehrere faserverstärkte Strukturbauteile als Verstärkung für die Tankwand des Kunststofftanks bereitgestellt, wobei die faserverstärkten Strukturbauteile jeweils eine Matrix aus dem zweiten thermoplastischen Kunststoff umfassen, wobei die faserverstärkten Strukturbauteile auf vordefinierte Bereiche der Außenschicht der Halbzeugplatte aufgebracht werden, wobei die Halbzeugplatte mit aufgebrachten faserverstärkten Strukturbauteilen einen Durchlaufofens durchlaufen, wobei die faserverstärkten Strukturbauteile mit der Außenschicht der Halbzeugplatte verschmelzen. Danach wird die Halbzeugplatte mit damit verschmolzenen faserverstärkten Strukturbauteilen in die Endform mindestens des Teiles der Tankwand umgeformt.

Bevorzugt bestehen beide Außenschichten der Halbzeugplatte aus dem ersten thermoplastischen Kunststoff und werden faserverstärkte Strukturbauteile auf vordefinierte Bereiche beider Außenschichten der Halbzeugplatte aufgebracht, also auf beide Seiten der Halbzeugplatte, so dass beim Durchlaufen der Halbzeugplatte mit aufgebrachten faserverstärkten Strukturbauteilen des Durchlaufofens die faserverstärkten Strukturbauteile mit den jeweiligen Außenschichten der Halbzeugplatte verschmelzen.

Vorzugsweise wird die Halbzeugplatte auf einem Förderband zum Durchlaufofen und/oder durch den Durchlaufofen bewegt und das Aufbringen des faserverstärkten Strukturbauteils auf die Halbzeugplatte erfolgt auf dem Förderband.

Besonders bevorzugt wird zunächst mindestens ein faserverstärktes Strukturbauteil auf das Förderband gelegt, danach die Halbzeugplatte auf das mindestens eine faserverstärkte Strukturbauteil gelegt und danach mindestens ein weiteres faserverstärktes Strukturbauteil auf die Halbzeugplatte gelegt. Anschließend durchläuft das Paket aus Halbzeugplatte und faserverstärkten Strukturbauteilen den Durchlaufofen und wird umgeformt.

Das Umformen erfolgt bevorzugt durch Tiefziehen.

Vorzugsweise werden vor dem Umformen und nach dem Durchlaufen des Durchlaufofens der oder die vordefinierten Bereiche der Halbzeugplatte, auf welche faserverstärkte Strukturbauteile aufgebracht sind, nochmals explizit erwärmt, insbesondere mittels regulierbaren Infrarot-Heizelementen, so dass eine gute Umformbarkeit erreicht wird.

Das Auflegen des faserverstärkten Strukturbauteils und/oder das Auflegen der Halbzeugplatte auf das Förderband erfolgt bevorzugt mittels einer Positioniereinrichtung, insbesondere einem Manipulator bzw. Roboter.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines Kunststoffbehälters mit Verstärkungen, der durch ein erfindungsgemäßes Verfahren hergestellt ist.
- Fig. 2: ist eine schematische Darstellung eines Zwischenzustandes bei der Herstellung eines Kunststofftanks gemäß Fig. 1 mit einem erfindungsgemäßen Verfahren.
- Fig. 3: ist eine schematische Darstellung einer Vorrichtung zur Herstellung eines Kunststofftanks gemäß Fig. 1 mit einem erfindungsgemäßen Verfahren.

### Detaillierte Beschreibung der Erfindung

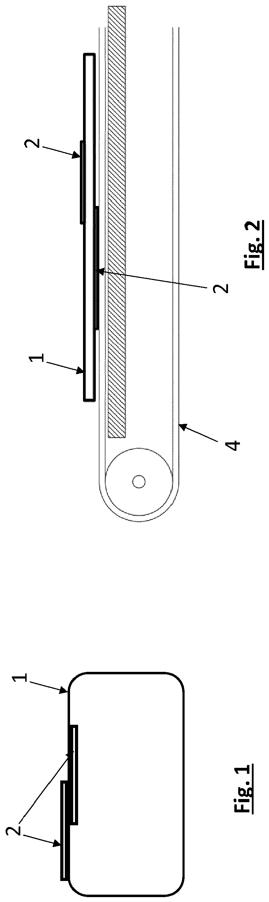

In Fig. 1 ist ein Kunststoffbehälter dargestellt, der mit einem erfindungsgemäßen Verfahren hergestellt wurde.

Der Kunststoffbehälter umfasst eine Tankwand, die aus der Halbzeugplatte 1 oder aus mehreren Halbzeugplatten 1 gebildet ist und umfasst eine oder mehrere faserverstärkte Strukturbauteile 2 als Versteifungen. Im Beispiel der Fig. 1 ist ein faserverstärkter Strukturbauteil 2 auf der Außenseite der Tankwand und ein weiterer faserverstärkter Strukturbauteil 2 auf der Innenseite der Tankwand angebracht.

Die Herstellung des Tanks erfolgt, wie in Fig. 2 dargestellt, vorzugsweise mit Hilfe eines Förderbandes 4.

Zunächst wird mindestens ein faserverstärktes Strukturbauteil 2 auf das Förderband 4 gelegt, danach wird eine Halbzeugplatte 1 auf das mindestens eine faserverstärkte Strukturbauteil 2 gelegt und danach wird mindestens ein weiteres faserverstärktes Strukturbauteil 2 auf die Halbzeugplatte 1 gelegt.

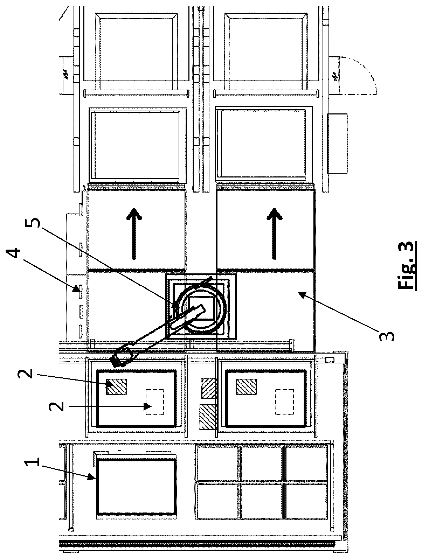

Wie in Fig. 3 ersichtlich, kann das Auflegen des faserverstärkten Strukturbauteils 2 und/oder das Auflegen der Halbzeugplatte 1 auf das Förderband 4 mittels einer Positioniereinrichtung 5 erfolgen.

Erfindungsgemäß wird somit eine lokale Verformung einer Tankschale durch Anbringung von faserverstärkten Strukturbauteilen 2 reduziert. Die Anbringung dieser Patches kann innerhalb sowie außerhalb des Tankes durchgeführt werden und somit an jeder der beiden Außenseiten der Halbzeugplatte 1, aus welcher der Tank hergestellt wird.

Das beschriebene Verfahren beruht auf der Positionierung und der Verschmelzung bzw. Verschweißung des Matrixwerkstoffes, insbesondere HDPE, der Faserpatches bzw. faserverstärkten Strukturbauteile 2 mit dem HDPE Außenschichtmaterial der Tankschale. Dies wird beim Durchlaufen des Tunnelofens 3 zur Erwärmung der Halbzeugplatte 1 vor dem Tiefziehprozess erreicht.

Im ersten Schritt wird durch eine geeignete Positioniereinrichtung 5 der Faserpatch 2 für die Anbringung auf die Tankinnenwand auf dem Förderband 3 abgelegt. Nach erfolgter Positionierung wird nun die Halbzeugplatte 1 auf dem Faserpatch 2 abgelegt. Im dritten Schritt wird von der Positioniereinrichtung 5 auch noch ein weiterer Faserpatch 2, für die Tankaußenwand, auf der Halbzeugplatte abgelegt.

Nun wird der Verbund umfassend die Halbzeugplatte 1 mit dem Förderband 4 durch den Durchlaufofen 3 bewegt und es kommt zur Aufheizung der Platte 1. Während des Aufheizvorganges verschmelzen die Faserpatches 2 mit der Halbzeugplatte 1.

Nach Aufnahme der so erzeugten Verbundplatte werden die Bereiche mit den Faserpatches 2 durch regulierbare Infrarot Heizelemente nochmals explizit erwärmt um für eine gute Umformbarkeit zu sorgen. Anschließend erfolgt der Tiefziehvorgang.

### Bezugszeichenliste

- 1: Halbzeugplatte
- 2: faserverstärktes Strukturbauteil
- 3: Durchlaufofen
- 4: Förderband
- 5: Positioniereinrichtung

## Patentansprüche

1. Verfahren zur Herstellung eines Kunststofftanks mit Verstärkungen, umfassend die Schritte: Bereitstellen einer Halbzeugplatte (1) aus Kunststoff zur Bildung mindestens eines Teiles der Tankwand des Kunststofftanks, wobei die Halbzeugplatte (1) zumindest eine Außenschicht aus einem ersten thermoplastischen Kunststoff aufweist, Bereitstellen mindestens eines faserverstärkten Strukturbauteils (2) als Verstärkung für die Tankwand des Kunststofftanks, wobei die Fläche des faserverstärkten Strukturbauteils (2) kleiner ist, als die Fläche der Halbzeugplatte (1), so dass das faserverstärkte Strukturbauteil (2) einen "Flecken" bildet, wobei das faserverstärkte Strukturbauteil (2) eine Matrix aus einem zweiten thermoplastischen Kunststoff umfasst, wobei der zweite thermoplastische Kunststoff mit dem ersten thermoplastischen Kunststoff verschweißbar ist, Aufbringen des faserverstärkten Strukturbauteils (2) auf einen vordefinierten Bereich der Außenschicht der Halbzeugplatte (1), Durchlaufen der Halbzeugplatte (1) mit aufgebrachtem faserverstärkten Strukturbauteil (2) eines Durchlaufofens (3) wobei der faserverstärkte Strukturbauteil (2) mit der Außenschicht der Halbzeugplatte (1) verschmilzt, Umformen der erwärmten Halbzeugplatte (1) mit damit verschmolzenem faserverstärkten Strukturbauteil (2) in die Endform mindestens des Teiles der Tankwand, Verbinden mit mindestens einem weiteren Teil der Tankwand zur Bildung der vollständigen Tankwand des Kunststofftanks.

2. Verfahren nach Anspruch 1,
**dadurch gekennzeichnet, dass** der erste thermoplastische Kunststoff der Außenschicht der Halbzeugplatte (1) und/oder der zweite thermoplastische Kunststoff der Matrix des faserverstärkten Strukturbauteils (2) High Density Polyethylen, HDPE, oder Polyamid, PA, oder Linear Low Density Polyethylen, LLDPE, ist.

3. Verfahren nach zumindest einem der vorhergehenden Ansprüche, **dadurch gekennzeichnet, dass** mehrere faserverstärkte Strukturbauteile (2) als Verstärkung für die Tankwand des Kunststofftanks bereitgestellt werden, wobei die faserverstärkten Strukturbauteile (2) jeweils eine Matrix aus dem zweiten thermoplastischen Kunststoff umfassen, Aufbringen der faserverstärkten Strukturbauteile (2) auf vordefinierte Bereiche der Außenschicht der Halbzeugplatte (1), Durchlaufen der Halbzeugplatte (1) mit aufgebrachten faserverstärkten Strukturbauteilen (2) eines Durchlaufofens (3) wobei die faserverstärkten Strukturbauteile (1) mit der Außenschicht der Halbzeugplatte (2) verschmelzen, Umformen der erwärmten Halbzeugplatte (1) mit damit verschmolzenen faserverstärkten Strukturbauteilen (2) in die Endform mindestens des Teiles der Tankwand.

4. Verfahren nach zumindest einem der vorhergehenden Ansprüche, **dadurch gekennzeichnet, dass** beide Außenschichten der Halbzeugplatte (1) aus dem ersten thermoplastischen Kunststoff bestehen und faserverstärkte Strukturbauteile (2) auf vordefinierte Bereiche beider Außenschichten der Halbzeugplatte (1) aufgebracht werden, so dass beim Durchlaufen der Halbzeugplatte (1) mit aufgebrachten faserverstärkten Strukturbauteilen (2) des Durchlaufofens (3) die faserverstärkten Strukturbauteile (2) mit den jeweiligen Außenschichten der Halbzeugplatte (1) verschmelzen.

5. Verfahren nach zumindest einem der vorhergehenden Ansprüche, **dadurch gekennzeichnet , dass** die Halbzeugplatte (1) auf einem Förderband (4) zum Durchlaufofen (3) und/oder durch den Durchlaufofen (3) bewegt wird und das Aufbringen des faserverstärkten Strukturbauteils (2) auf die Halbzeugplatte (1) auf dem Förderband (4) erfolgt.

6. Verfahren nach Anspruch 4 und 5,
**dadurch gekennzeichnet, dass** zunächst mindestens ein faserverstärktes Strukturbauteil (2) auf das Förderband (4) gelegt wird, danach die Halbzeugplatte (1) auf das mindestens eine faserverstärkte Strukturbauteil (2) gelegt wird und danach mindestens ein weiteres faserverstärktes Strukturbauteil (2) auf die Halbzeugplatte (1) gelegt wird.

7. Verfahren nach zumindest einem der vorhergehenden Ansprüche, **dadurch gekennzeichnet, dass** das Umformen durch Tiefziehen erfolgt.

8. Verfahren nach zumindest einem der vorhergehenden Ansprüche, **dadurch gekennzeichnet, dass** vor dem Umformen und nach dem Durchlaufen des Durchlaufofens (3) der oder die vordefinierten Bereiche der Halbzeugplatte (1), auf welche faserverstärkte Strukturbauteile (2) aufgebracht sind, nochmals explizit erwärmt werden.

9. Verfahren nach zumindest einem der vorhergehenden Ansprüche, **dadurch gekennzeichnet, dass** das Auflegen des faserverstärkten Strukturbauteils (2) und/oder das Auflegen der Halbzeugplatte (1) auf das Förderband (4) mittels einer Positioniereinrichtung (5) erfolgt.

## Claims

1. Method for producing a plastic tank having reinforcements, comprising the following steps: providing a semifinished panel (1) made of plastic to form at least one part of the tank wall of the plastic tank, wherein the semifinished panel (1) has at least one outer layer composed of a first thermoplastic, providing at least one fibre-reinforced structural component (2) as a reinforcement for the tank wall of the plastic tank, wherein the area of the fibre-reinforced structural component (2) is smaller than the area of the semifinished panel (1), so that the fibre-reinforced structural component (2) forms a "patch", wherein the fibre-reinforced structural component (2) comprises a matrix composed of a second thermoplastic, wherein the second thermoplastic is weldable to the first thermoplastic, applying the fibre-reinforced structural component (2) to a predefined region of the outer layer of the semifinished panel (1), passing the semifinished panel (1) with the applied fibre-reinforced structural component (2) through a continuous furnace (3), wherein the fibre-reinforced structural component (2) fuses with the outer layer of the semifinished panel (1), forming the heated semifinished panel (1), together with the fibre-reinforced structural component (2) fused therewith, into the final shape of at least said part of the tank wall, and connecting to at least one other part of the tank wall to form the complete tank wall of the plastic tank.

2. Method according to Claim 1,
**characterized in that** the first thermoplastic of the outer layer of the semifinished panel (1) and/or the second thermoplastic of the matrix of the fibre-reinforced structural component (2) are/is high-density polyethylene, HDPE, or polyamide, PA, or linear low density polyethylene, LLDPE.

3. Method according to at least one of the preceding claims, **characterized in that** a plurality of fibre-reinforced structural components (2) is provided as a reinforcement for the tank wall of the plastic tank, wherein the fibre-reinforced structural components (2) each comprise a matrix composed of the second thermoplastic, the fibre-reinforced structural components (2) are applied to predefined regions of the outer layer of the semifinished panel (1), the semifinished panel (1), together with the applied fibre-reinforced structural components (2), passes through a continuous furnace (3), wherein the fibre-reinforced structural components (2) fuse with the outer layer of the semifinished panel (2), and the heated semifinished panel (1), together with the fibre-reinforced structural components (2) fused therewith, is formed into the final shape of at least said part of the tank wall.

4. Method according to at least one of the preceding claims, **characterized in that** both outer layers of the semifinished panel (1) are composed of the first thermoplastic, and fibre-reinforced structural components (2) are applied to predefined regions of both outer layers of the semifinished panel (1), with the result that the fibre-reinforced structural components (2) fuse to the respective outer layers of the semifinished panel (1) as the semifinished panel (1) with the applied fibre-reinforced structural components (2) passes through the continuous furnace (3).

5. Method according to at least one of the preceding claims, **characterized in that** the semifinished panel (1) is moved on a conveyor belt (4) to the continuous furnace (3) and/or through the continuous furnace (3), and the application of the fibre-reinforced structural component (2) to the semifinished panel (1) takes place on the conveyor belt (4).

6. Method according to Claim 4 and 5,
**characterized in that**, first of all, at least one fibre-reinforced structural component (2) is laid on the conveyor belt (4), after which the semifinished panel (1) is laid on the at least one fibre-reinforced structural component (2), and then at least one further fibre-reinforced structural component (2) is laid on the semifinished panel (1).

7. Method according to at least one of the preceding claims, **characterized in that** forming is accomplished by deep drawing.

8. Method according to at least one of the preceding claims, **characterized in that**, before the forming and after the passage through the continuous furnace (3), the predefined region or regions of the semifinished panel (1) to which fibre-reinforced structural components (2) are applied are explicitly heated once again.

9. Method according to at least one of the preceding claims, **characterized in that** the laying of the fibre-reinforced structural component (2) and/or the laying of the semifinished panel (1) on the conveyor belt (4) are/is performed by means of a positioning device (5).

## Revendications

1. Procédé de fabrication d'un réservoir en matière plastique muni de renforts, comprenant les étapes suivantes : la fourniture d'une plaque semi-finie (1) en matière plastique pour la formation d'au moins une partie de la paroi de réservoir du réservoir en matière plastique, la plaque semi-finie (1) comprenant au moins une couche extérieure en une première matière plastique thermoplastique, la fourniture d'au moins un composant structural renforcé par des fibres (2) en tant que renfort pour la paroi de réservoir du réservoir en matière plastique, la surface du composant structural renforcé par des fibres (2) étant inférieure à la surface de la plaque semi-finie (1), de telle sorte que le composant structural renforcé par des fibres (2) forme une « tache », le composant structural renforcé par des fibres (2) comprenant une matrice en une deuxième matière plastique thermoplastique, la deuxième matière plastique thermoplastique pouvant être soudée avec la première matière plastique thermoplastique, l'application du composant structural renforcé par des fibres (2) sur une zone prédéfinie de la couche extérieure de la plaque semi-finie (1), le passage de la plaque semi-finie (1) munie du composant structural renforcé par des fibres (2) appliqué dans un four continu (3), le composant structural renforcé par des fibres (2) étant lié par fusion avec la couche extérieure de la plaque semi-finie (1), la déformation de la plaque semi-fini (1) chauffée avec le composant structural renforcé par des fibres (2) lié avec celle-ci par fusion en la forme finale au moins de la partie de la paroi de réservoir, le raccordement avec au moins une autre partie de la paroi de réservoir pour la formation de la paroi de réservoir entière du réservoir en matière plastique.

2. Procédé selon la revendication 1, **caractérisé en ce que** la première matière plastique thermoplastique de la couche extérieure de la plaque semi-finie (1) et/ou la deuxième matière plastique thermoplastique de la matrice du composant structural renforcé par des fibres (2) est du polyéthylène haute densité, HDPE, ou du polyamide, PA, ou du polyéthylène linéaire basse densité, LLDPE.

3. Procédé selon au moins l'une quelconque des revendications précédentes, **caractérisé en ce que** plusieurs composants structuraux renforcés par des fibres (2) sont fournis en tant que renfort pour la paroi de réservoir du réservoir en matière plastique, les composants structuraux renforcés par des fibres (2) comprenant chacun une matrice en la deuxième matière plastique thermoplastique, l'application des composants structuraux renforcés par des fibres (2) sur des zones prédéfinies de la couche extérieure de la plaque semi-finie (1), le passage de la plaque semi-finie (1) avec les composants structuraux renforcés par des fibres (2) appliqués dans un four continu (3), les composants structuraux renforcés par des fibres (1) étant liés par fusion avec la couche extérieure de la plaque semi-finie (2), la déformation de la plaque semi-fini (1) chauffée avec les composants structuraux renforcés par des fibres (2) liés avec celle-ci par fusion en la forme finale au moins de la partie de la paroi de réservoir.

4. Procédé selon au moins l'une quelconque des revendications précédentes, **caractérisé en ce que** les deux couches extérieures de la plaque semi-finie (1) sont constituées de la première matière plastique thermoplastique et les composants structuraux renforcés par des fibres (2) sont appliqués sur des zones prédéfinies des deux couches extérieures de la plaque semi-finie (1), de telle sorte que lors du passage de la plaque semi-finie (1) avec les composants structuraux renforcés par des fibres (2) appliqués dans le four continu (3), les composants structuraux renforcés par des fibres (2) sont liés par fusion avec les couches extérieures respectives de la plaque semi-finie (1).

5. Procédé selon au moins l'une quelconque des revendications précédentes, **caractérisé en ce que** la plaque semi-finie (1) est déplacée vers le four continu (3) et/ou à travers le four continu (3) sur une bande de transport (4), et l'application du composant structural renforcé par des fibres (2) sur la plaque semi-finie (1) a lieu sur la bande de transport (4).

6. Procédé selon la revendication 4 ou 5, **caractérisé en ce que** tout d'abord au moins un composant structural renforcé par des fibres (2) est placé sur la bande de transport (4), puis la plaque semi-finie (1) est placée sur l'au moins un composant structural renforcé par des fibres (2), et ensuite au moins un autre composant structural renforcé par des fibres (2) est placé sur la plaque semi-finie (1).

7. Procédé selon au moins l'une quelconque des revendications précédentes, **caractérisé en ce que** la déformation a lieu par emboutissage profond.

8. Procédé selon au moins l'une quelconque des revendications précédentes, **caractérisé en ce qu'**avant la déformation et après le passage dans le four continu (3) de la ou des zones prédéfinies de la plaque semi-finie (1), sur lesquelles des composants structuraux renforcés par des fibres (2) sont appliqués, celles-ci sont encore explicitement chauffées.

9. Procédé selon au moins l'une quelconque des revendications précédentes, **caractérisé en ce que** la pose du composant structural renforcé par des fibres (2) et/ou la pose de la plaque semi-finie (1) sur la bande de transport (4) a lieu au moyen d'un appareil de positionnement (5).
